(19) Europäisches Patentamt

European Patent Office

Office européen des brevets

(11) Veröffentlichungsnummer : **0 097 884**
**B1**

(12) **EUROPÄISCHE PATENTSCHRIFT**

(45) Veröffentlichungstag der Patentschrift :
26.03.86

(21) Anmeldenummer : 83105904.3

(22) Anmeldetag : 16.06.83

(51) Int. Cl.⁴ : **H 04 N   3/18, H 02 P 13/00**

(54) **Schaltnetzteil für ein Gerät mit Bereitschaftsbetrieb, insbesondere einen Fernsehempfänger.**

(30) Priorität : 25.06.82 DE 3223756

(43) Veröffentlichungstag der Anmeldung :
11.01.84 Patentblatt 84/02

(45) Bekanntmachung des Hinweises auf die Patenterteilung : 26.03.86 Patentblatt 86/13

(84) Benannte Vertragsstaaten :
AT BE FR GB IT NL SE

(56) Entgegenhaltungen :
DE-A- 2 620 191
DE-A- 2 711 020
DE-A- 2 718 195
DE-B- 2 459 375
FR-A- 2 116 287

(73) Patentinhaber : **TELEFUNKEN Fernseh und Rundfunk
GmbH
Göttinger Chaussee 76
D-3000 Hannover 91 (DE)**

(72) Erfinder : **von der Ohe, Wilfried
Holtenser Weg 35
D-3257 Springe 5 (DE)**

(74) Vertreter : **Einsel, Robert, Dipl.-Ing.
TELEFUNKEN Fernseh und Rundfunk GmbH Göttinger Chaussee 76
D-3000 Hannover 91 (DE)**

## Beschreibung

Bei Geräten der Nachrichtentechnik, wie z. B. einem Fernsehempfänger ist es bekannt, die für die einzelnen Stufen notwendigen Betriebsspannungen mit einem Schaltnetzteil aus der Netzspannung zu erzeugen (Funkschau 1975, Heft 5, Seite 40-43). Ein Schaltnetzteil ermöglicht die für den Anschluß äußerer Geräte und für die Maßnahmen zur Schutzisolierung vorteilhafte galvanische Trennung der Empfängerschaltung vom Netz. Da ein Schaltnetzteil mit einer gegenüber der Netzfrequenz hohen Frequenz von ca. 30 kHz arbeitet, kann der zur galvanischen Trennung dienende Trenntransformator gegenüber einem Netztrafo für 50 Hz wesentlich kleiner und leichter ausgebildet sein. Durch mehrere Wicklungen oder Wicklungsabgriffe und angeschlossene Gleichrichter können auf der Sekundärseite des Trenntransformators mehrere Spannungen unterschiedlicher Größe und Polarität erzeugt werden.

Es ist andererseits bekannt, derartige Geräte, wie einen Fernsehempfänger im sogenannten Bereitschaftsbetrieb (stand by) zu betreiben. Im Bereitschaftsbetrieb sind z. B. nur ein Tuner und ein Fernbedienungsempfänger betriebsfähig, so daß der Empfänger jederzeit von einer Fernbedienung eingeschaltet werden kann. Für einen derartigen Bereitschaftsbetrieb müssen also verschiedene Betriebsspannungen wie z. B. für die Signalverstärker und die Ablenkschaltungen abgeschaltet werden, während wenigstens eine andere Betriebsspannung bestehen bleiben muß.

Hierzu ist es bekannt (DE-OS-27 11 020), die an der Sekundärseite des Trenntransformators erzeugten Betriebsspannungen mit mehreren Kontakten eines Relais im Bereitschaftsbetrieb abzuschalten und die Betriebsspannung für einen Fernbedienempfänger unabgeschaltet zu lassen. Ein derartiges Relais ist jedoch ein relativ teures und störanfälliges Bauteil. Außerdem erhöht sich durch die verringerte Belastung im Bereitschaftsbetrieb die Arbeitsfrequenz stark, wodurch sich ein schlechter Wirkungsgrad und ein relativ hoher Leistungsbedarf im Bereitschaftsbetrieb ergeben. Die erhöhte Arbeitsfrequenz im Bereitschaftsbetrieb erfordert außerdem eine schnelle Thyristorschaltung mit erhöhtem Schaltungsaufwand.

Es ist auch ein für Bereitschaftsbetrieb vorgesehenes Schaltnetzteil ohne Relais bekannt (DE-OS-26 24 965). Dort wird die Sekundärseite des Trenntransformators bei Bereitschaftsbetrieb so stark belastet, daß durch die Kurzschlußeigenschaft die Betriebsspannungen zusammenbrechen und die angeschlossenen Stufen nicht mehr arbeiten. Diese bekannte Schaltung arbeitet insbesondere bei einer Netzspannung von 110 V und den zugehörigen Unterspannungen bis zu 70 V nicht mehr einwandfrei, weil die primärseitige Regelung die erhöhte Belastung im Sinne einer Stabilisierung der Betriebsspannungen auszuregeln versucht. Außerdem ergibt sich bei dieser Schaltung durch die starke sekundärseitige Belastung ein relativ schlechter Wirkungsgrad im Bereitschaftsbetrieb.

Ferner ist durch die DE-OS 26 20 191 ein Schaltnetzteil mit Bereitschaftsbetrieb bekannt, bei dem auf der Sekundärseite des Transformators Wicklungen mit unterschiedlichem Wickelsinn für die Versorgung von Geräteteil und Fernbedienteil vorgesehen sind. Die Umsteuerung der Betriebsarten erfolgt durch einen Steuerstrom aus dem Fernbedienteil, der auf eine primärseitige Impulsbreitenregelschaltung einwirkt.

Durch die unterschiedliche Polung der sekundären Versorgungswicklungen wird je nach Impulsbreite z. B. der Bereitschaftsbetrieb der Versorgungsspannung für den Fernbedienteil aufrechterhalten, während die Betriebsspannungen im Geräteteil soweit herabgesetzt werden, daß die angeschlossenen Stufen nicht mehr arbeiten.

Diese Schaltung hat die Nachteile, daß wegen der Steuerleitung zwischen der Sekundärseite und der Primärseite keine galvanische Trennung zwischen Sekundärseite und Primärseite besteht und für die Erzeugung der Betriebsspannung für den Bereitschaftsbetrieb eine zusätzliche, spezielgepolte Sekundärwicklung erforderlich ist.

Die Erfindung geht aus von einer Schaltung der zuletzt beschriebenen Art.

Dabei liegt der Erfindung die Aufgabe zugrunde, ein derartiges Schaltnetzteil so auszubilden, daß die galvanische Trennung zwischen Sekundärseite und Primärseite des Transformators erhalten bleibt und keine zusätzliche Sekundärwicklung für die Erzeugung der Betriebsspannung für den Fernbedienempfänger erforderlich ist.

Diese Aufgabe wird durch die im Kennzeichen des Anspruchs 1 angegebenen Merkmale gelöst. Vorteilhafte Weiterbildungen der Erfindung sind in den Unteransprüchen beschrieben.

Dabei wird die Tatsache ausgenutzt, daß die für die Funktion der angeschlossenen Stufen nicht ausreichende Betriebsspannung mit ihrem verringerten Wert als Betriebsspannung für die im Bereitschaftsbetrieb wirksamen Stufen ausgenutzt werden kann, da diese eine geringere Betriebsspannung benötigen. Die Einkopplung der sekundärseitig auftretenden Spannung in den primärseitigen Regelkreis kann dabei mit handelsüblichen, preiswerten und die hinsichtlich galvanischer Trennung bestehenden VDE-Bestimmungen erfüllenden sogenannten Optokopplern erfolgen. Ein weiterer Vorteil der Erfindung besteht darin, daß im Bereitschaftsbetrieb die Arbeitsfrequenz nicht wie bei bekannten Schaltungen stark zunimmt, sondern abnimmt, z. B. von 36 kHz auf 18 kHz. Diese gegenüber bekannten Schaltungen geringere Frequenz im Bereitschaftsbetrieb führt zu einem erhöhten Wirkungsgrad von ca. 80 % im Bereitschafts-

betrieb. Bei dem erfindungsgemäßen Schaltnetz-teil entsteht beim Umschalten zwischen Bereitschaftsbetrieb und Normalbetrieb kein Einbruch in den Betriebsspannungen. Daher können die Siebmittel im Weg dieser Betriebsspannungen einfacher aufgebaut sein als bei bekannten Schaltungen.

Ein Ausführungsbeispiel der Erfindung wird anhand der Zeichnung für ein Schaltnetzteil eines Fernsehempfängers erläutert. Darin zeigen :

Figur 1 ein Schaltbild eines Schaltnetzteils,

Figur 2 Kurven zur Erläuterung der Wirkungsweise für Normalbetrieb,

Figur 3 Kurven für den Bereitschaftsbetrieb und

Figur 4 Kurven zur Erläuterung der Wirkungsweise einer Weiterbildung der Erfindung. Dabei zeigen die kleinen Buchstaben, an welchen Punkten in Figur 1 die Spannungen gemäß Figur 3, 4 stehen.

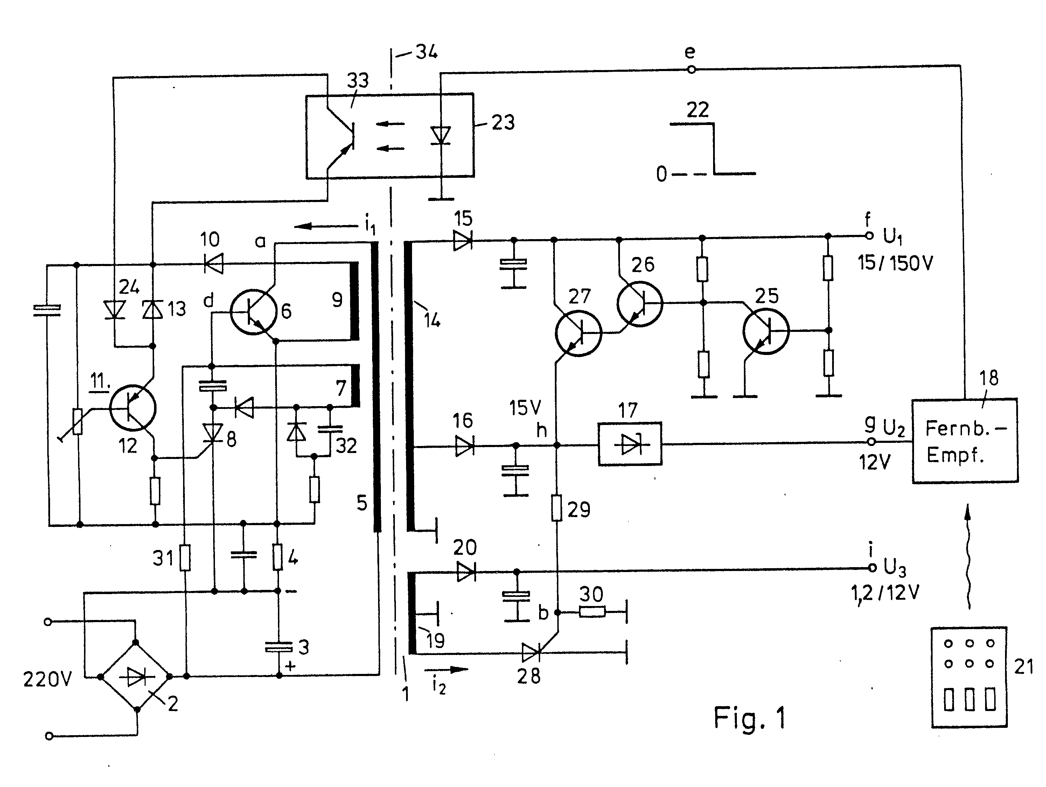

Das Schaltnetzteil gemäß Figur 1 enthält auf der Primärseite des Trenntransformators 1 den Netzgleichrichter 2, den Ladekondensator 3, den Strom-Meßwiderstand 4, die Arbeitswicklung 5, den Schalttransistor 6, die zur Schwingungserzeugung dienende Rückkopplungswicklung 7, den zur Steuerung des Schalttransistors 6 dienenden Thyristor 8, die Regelwicklung 9, den zur Erzeugung der Regelspannung dienenden Gleichrichter 10 sowie die zur Stabilisierung der Betriebsspannungen dienende Regelschaltung 11 mit dem Transistor 12 und der eine Referenzspannung liefernden Zenerdiode 13. Die Sekundärwicklung 14 liefert über den Gleichrichter 15 an der Klemme f eine erste Betriebsspannung U1. Ein Abgriff der Wicklung 14 liefert über den Gleichrichter 16 und den Spannungsstabilisator 17 an der Klemme g die zweite Betriebsspannung U2 für den Fernbedienungsempfänger 18. Eine weitere Sekundärwicklung 19 liefert über den Gleichrichter 20 an der Klemme i eine weitere Betriebsspannung U3. Die strichpunktierte Linie 34 deutet die galvanische Trennstelle zwischen Netz und Empfängerschaltung an.

Bei Normalbetrieb ist U1 = 150 V, U2 = 12 V und U3 = 12 V. Es sind dann alle Stufen des Fernsehempfängers voll wirksam. Die von dem Fernbedienungsempfänger 18 am Punkt e erzeugte Spannung beträgt dabei 0 V.

Beim Umschalten vom Normalbetrieb auf den Bereitschaftsbetrieb mittels der Fernbedieneinheit 21 erzeugt der Fernbedienempfänger 18 am Punkt e die Spannung 22. Diese Spannung gelangt auf den Steuereingang des Optokopplers 23, so daß die den Ausgang des Optokopplers 23 darstellende Kollektor-Emitter-Strecke eines Transistors 33 leitend wird. Dadurch wird die die Referenzspannung für die Regelschaltung 11 liefernde Zenerdiode 13 über die nunmehr leitend gesteuerte Diode 24 kurzgeschlossen, so daß am Emitter des Transistors 12 eine durch die Fußspannung von Diode 24 und Kollektor-Emitter-Strecke des Transistors 33 bestimmte geringere Referenzspannung steht. Diese verringerte Referenzspannung wirkt in dem Sinne, daß über die auf die Steuerelektrode des Thyristors 8 wirkende Regelschaltung 11 die Betriebsspannungen U1, U2 und U3 auf etwa 10 % ihres Nennwertes heruntergeregelt werden. Die an die Klemmen f und i angeschlossenen Stufen wie z. B. die Signalverstärker und Ablenkschaltungen arbeiten bei dieser stark verringerten Betriebsspannung nicht mehr und sind somit in erwünschter Weise wirkungslos. Da die Spannung U2 ebenfalls auf 10 % = 1,2 V heruntergeregelt wird, wäre der Fernbedienempfänger 18 nicht mehr betriebsfähig.

Zwischen den Punkten f und h ist nun der elektronische Schalter mit den Transistoren 25, 26, 27 vorgesehen. Die Schalterstrecke, d. h. die Kollektor-Emitter-Strecke des Transistors 27 ist bei Normalbetrieb durch den leitenden Transistor 25 gesperrt. Bei Umschaltung auf Bereitschaftsbetrieb sinkt die Spannung am Punkt f und damit an der Basis des Transistors 25 so weit, daß der Transistor 25 gesperrt und die Transistoren 26, 27 leitend gesteuert werden. Die Kollektor-Emitter-Strecke des Transistors 27 wird voll leitend und verbindet somit den Punkt f mit dem Punkt h. Die verringerte Betriebsspannung U1 = 15 V wird am Punkt h wirksam, der andererseits durch den gesperrt bleibenden Gleichrichter 16 von der Sekundärwicklung 14 getrennt bleibt. Am Punkt g steht nun trotz der Verringerung der Spannungen U1 und U3 unverändert eine Spannung von U2 = 12 V, so daß der Fernbedienenempfänger 18 weiter arbeitet. Die Betriebsspannung U1 mit ihrem verringerten Wert von 15 V wird also bei Bereitschaftsbetrieb als unverändert bestehende Spannung U2 ausgenutzt. Die Spannung U2 kann auch weitere Stufen wie z. B. einen Tuner speisen, die bei Bereitschaftsbetrieb weiter arbeiten müssen.

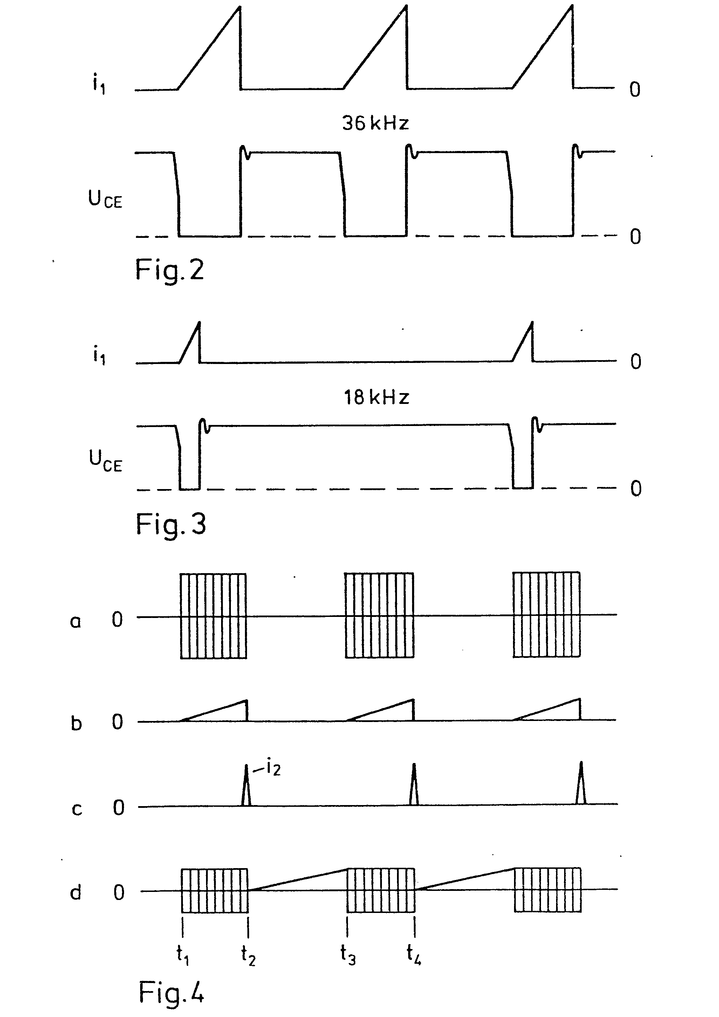

Figur 2 zeigt den Strom i1 durch die Arbeitswicklung 5 und die Kollektor-Emitter-Strecke des Transistors 6 sowie die zugehörige Spannung $U_{CE}$ über der Kollektor-Emitter-Strecke des Transistors 6 für eine Arbeitsfrequenz von 36 kHz und eine primärseitige Leistungsaufnahme von 90 W im Normalbetrieb.

Bei Umschaltung von Normalbetrieb auf Bereitschaftsbetrieb wird bei einem bekannten Schaltnetzteil die Frequenz durch die auftretende Entlastung des Schaltnetzteils erheblich größer. Bei dieser erhöhten Frequenz arbeitet der Schalttransistor nicht mehr einwandfrei als Schalter, so daß sich die Verlustleistung an dem Transistor erhöht. Ein wesentlicher Teil der aufgenommenen Netzleistung gelangt dann nicht zum Fernbedienungsempfänger, sondern wird an dem Schalttransistor verbraucht. Das bedeutet einen schlechten Wirkungsgrad. Wie Figur 3 zeigt, wird im vorliegenden Fall die Frequenz nicht höher, sondern verringert sich auf den Wert von 18 kHz. Während bei dem bekannten Schaltnetzteil durch die starke Frequenzerhöhung in unerwünschter Weise sehr kleine kurzzeitige Ströme i1 auftraten, ergeben sich bei der Frequenz von 18 kHz in erwünschter Weise Ströme i1 mit einer größeren Amplitude und einer längeren Dauer. Dadurch wird ein einwandfreies Schalterverhalten des Transistors erreicht. Die Spannung $U_{CE}$ hat dann wieder in erwünschter Weise einen annähernd rechteckförmigen Verlauf, so daß die Schaltverluste in erwünschter Weise kleiner werden.

Die Regelschaltung 11 in Figur 1 dient zur Stabilisierung der Spannungen U1, U2, U3. In der Praxis kann es vorkommen, daß die Regelschaltung 11 durch ein schadhaftes Bauteil ausfällt. Die Betriebsspannungen U1, U2, U3 sind dann nicht mehr kontrolliert und können unzulässig hohe Werte, in der Praxis den doppelten oder dreifachen Wert annehmen. Dadurch sind das Schaltnetzteil und die angeschlossenen Verbraucher wie z. B. der Zeilenendstufentransistor oder der Heizfaden der Bildröhre gefährdet. Zum Schutz gegen diese Gefahr ist an die Sekundärwicklung 19 zusätzlich der Thyristor 28 angeschlossen. An seine Steuerelektrode ist der Punkt h über den Spannungsteiler 29, 30 angeschlossen.

Die Wirkungsweise dieser Schutzschaltung wird anhand der Figur 4 erläutert. Im normalen störungsfreien Betrieb gelten in Figur 4 die Verhältnisse zwischen den Zeitpunkten t1 und t2. An der Arbeitswicklung 5 steht eine etwa rechteckförmige Spannung gemäß Figur 4a mit einer Frequenz von 25-30 kHz aufgrund der periodischen Sperrung des Schalttransistors 6. Durch die Wirkung der Rückkopplungswicklung 7 steht an der Basis des Schalttransistors 6 eine Steuerspannung gemäß Figur 4d mit derselben Frequenz wie die Spannung gemäß Figur 4a. Die Spannung am Punkt b ist kleiner als 0,7 V, so daß der Thyristor 28 nicht zündet und somit auf die Schaltung keinen Einfluß hat. Wenn aufgrund eines Fehlers die Betriebsspannung am Punkt h über einen maximal zulässigen Wert ansteigt, steigt auch die Spannung am Punkt b, d. h. an der Steuerelektrode des Thyristors 28 an. Im Zeitpunkt t2 hat diese Spannung den Wert 0,7 V erreicht, so daß der Thyristor 28 zündet. Die Wicklung 19 und der Thyristor 28 sind so gepolt, daß der Thyristor 28 für die stromleitende Phase des Schalttransistors 6 leitend gesteuert ist. Der Transformator 1 ist daher für die stromleitende Phase sekundärseitig stark belastet. Dadurch bricht die Rückkopplungsspannung an der Rückkopplungswicklung 7 zusammen. Der Schalttransistor 6 wird nicht mehr angesteuert, so daß auch die Spannung am Punkt a zusammenbricht. Das Schaltnetzteil schwingt jetzt nicht mehr, so daß die Energiezufuhr zu den Ladekondensatoren an den Gleichrichtern 15, 16, 20 unterbrochen ist. Die Betriebsspannungen U1, U2, U3 können also nicht weiter ansteigen. Sie nehmen entsprechend den wirksamen Entladezeitkonstanten der Ladekondensatoren ab. Das gesamte Schaltnetzteil würde jetzt ausgeschaltet bleiben. Die Primärseite des Transformators 1 enthält die Startschaltung mit dem Widerstand 31 und dem Kondensator 32. Der Kondensator 32 wird beginnend im Zeitpunkt t1 über den Widerstand 31 in Richtung der positiven Spannung am Ausgang des Gleichrichters 2 aufgeladen, so daß die Spannung am Punkt d, also an der Basis des Schalttransistors 6, von t2 bis t3 langsam ansteigt, wie Figur 4d zeigt. Im Zeitpunkt t3 ist diese Spannung so weit angestiegen, daß der Schalttransistor 6 wieder leitend gesteuert wird, die rechteckförmigen Spannungen am Transistor 6 gemäß Figur 4a und d wieder auftreten und das gesamte Schaltnetzteil wieder schwingt. Ist der Fehler nach wie vor vorhanden, wird das Schaltnetzteil im Zeitpunkt t4 wieder abgeschaltet. Das Schaltnetzteil geht also gemäß Figur 4 in einen getakteten Betrieb über. In diesem Betrieb wird entsprechend dem Verhältnis zwischen der Einschaltdauer t1-t2 und der Ausschaltdauer t2-t3 eine verringerte Leistung auf die Sekundärseite übertragen, so daß die Betriebsspannungen U1, U2, U3 keine unzulässig hohen Werte mehr annehmen können. Der Zeitraum t1-t2 ist somit im wesentlichen durch die Zeitkonstante am Gleichrichter 16 und der Zeitraum t2-t3 durch die Zeitkonstante aus dem Widerstand 31 und dem Kondensator 32 gegeben. Durch Vergrößerung der Kapazität des Kondensators 32 kann also die Dauer der Ausschaltzeit t2-t3 vergrößert werden.

**Patentansprüche**

1. Schaltnetzteil mit einem Trenntransformator (1) für ein Gerät mit Bereitschaftsbetrieb, insbesondere einen Fernsehempfänger, mit einem ersten Gleichrichter (15) zur Erzeugung einer ersten hohen Betriebsspannung (U1) und einem zweiten Gleichrichter (16) zur Erzeugung einer zweiten niedrigen, auch im Bereitschaftsbetrieb wirksamen Betriebsspannung (U2), wobei die erste Betriebsspannung (U1) im Bereitschaftsbetrieb durch eine sekundärseitig auftretende Spannung (22) über eine primärseitige Regelschaltung (11) soweit herabgesetzt wird, daß die an die erste Betriebsspannung (U1) angeschlossenen Stufen nicht mehr arbeiten, dadurch gekennzeichnet, daß die sekundärseitig auftretende Spannung (22) über ein vom Trenntransformator (1) getrenntes galvanisches Trennelement (23) der primärseitigen Regelschaltung (1) zugeführt und die erste Betriebsspannung (U1) mit ihrem verringerten Wert (15 V) als zweite Betriebsspannung (U2) ausgenutzt wird.

2. Netzteil nach Anspruch 1, dadurch gekennzeichnet, daß das Trennelement ein Optokoppler (23) ist.

3. Netzteil nach Anspruch 1, dadurch gekennzeichnet, daß der Ausgang des Trennelemnetes (23) zur Umschaltung einer Referenzspannung (13) in der Regelschaltung (11) dient.

4. Netzteil nach Anspruch 3, dadurch gekennzeichnet, daß der Ausgang des Trennelementes Element (13) die Reihenschaltung aus dem Ausgang des Trennelementes (23) und einer Diode (24) liegt.

5. Netzteil nach Anspruch 1, dadurch gekennzeichnet, daß zwischen dem Punkt (f) mit der ersten Betriebsspannung (U1) und dem Punkt (h) mit der zweiten Betriebsspannung (U2) ein elektronischer Schalter (25-27) liegt, der durch die erste Betriebsspannung (U1) mit ihrem verringerten Wert leitend gesteuert ist.

## Claims

1. Switch mode power supply having an isolating transformer (1) for an apparatus having a stand-by condition, especially a television receiver, having a first rectifier (15) for producing a first high drive voltage (U1) and a second rectifier (16) for producing a second low drive voltage (U2), which is also effective in the stand-by condition, whereby the first drive voltage (U1) is reduced in the stand-by condition via a primary side control circuit (11) by a voltage (22) appearing at the secondary side to such a degree that the stages connected to the first drive voltage (U1) no longer function, characterized in that the voltage (22) arising at the secondary side is applied to the primary side control circuit (11) via a galvanic isolating element (23) distinct from the isolating transformer (1), and the first drive voltage (U1) is utilised with its reduced value (15 V) as the second drive voltage.

2. Power supply according to Claim 1, characterized in that the isolating element is an optical coupler (23).

3. Power supply according to Claim 1, characterized in that the output of the isolating element (23) serves for the switching over of a reference voltage (13) in the control circuit (11).

4. Power supply according to Claim 3, characterized in that the series combination of the output of the isolating element (23) and a diode (24) is disposed parallel to the reference voltage element (13).

5. Power supply according to Claim 1, characterized in that an electronic switch (25-27) lies between the point (f) having the first drive voltage and the point (h) having the second drive voltage, which switch is constrained to conduct by the first drive voltage at its reduced value.

## Revendications

1. Bloc secteur avec transformateur de séparation (1), pour un appareil avec fonctionnement en état d'attente, en particulier un récepteur de télévision, avec un premier redresseur (15) pour la production d'une première tension de fonctionnement élevée (U1) et un deuxième redresseur (16) pour la production d'une deuxième tension de fonctionnement plus faible, effective également en état d'attente (U2), la première tension de fonctionnement (U1) étant, en état d'attente, abaissée grâce à une tension apparaissant au secondaire (22) et agissant sur un circuit de régulation branché du côté primaire (11), de façon telle que les étages recevant la première tension de fonctionnement (U1) ne fonctionnent plus, caractérisé par le fait que la tension apparaissant du côté secondaire (22) est amenée au circuit de régulation (11) du côté primaire, par un élément de séparation galvanique (23), distinct du transformateur de séparation (1), et que la première tension de fonctionnement (U1) est, avec sa valeur abaissée (15 V) utilisée en tant que deuxième tension de fonctionnement (U2).

2. Bloc secteur selon la revendication 1, caractérisé par le fait que l'élément de séparation est un optocoupleur (23).

3. Bloc secteur selon la revendication 1, caractérisé par le fait que la sortie de l'élément de séparation (23) sert à la commutation d'une tension de référence (13) du circuit de régulation (11).

4. Bloc secteur selon la revendication 3, caractérisé par le fait que l'on branche en parallèle à l'élément de tension de référence (13), un circuit série comprenant la sortie de l'élément de séparation (23) ainsi qu'une diode (24).

5. Bloc secteur selon la revendication 1, caractérisé par le fait qu'entre le point (f) sur lequel apparaît la première tension de fonctionnement (U1) et le point (h) sur lequel apparaît la deuxième tension de fonctionnement (U2), on branche un commutateur électronique (25-27), qui est rendu passant par la première tension de fonctionnement (U1), avec sa valeur abaissée.

Fig. 1

0 097 884

$i_1$

36 kHz

$U_{CE}$

**Fig. 2**

$i_1$

18 kHz

$U_{CE}$

**Fig. 3**

a   0

b   0

$-i_2$

c   0

d   0

$t_1$   $t_2$   $t_3$   $t_4$

**Fig. 4**